# EUROPEAN PATENT SPECIFICATION

(11) **EP 2 842 789 B1**
(45) Date of publication and mention of the grant of the patent: **12.10.2016**
(21) Application number: 14179504.7
(22) Date of filing: 01.08.2014
(51) Int. Cl.: B60K 37/02, B60K 35/00, B60Q 3/04, G01D 5/00, G01D 13/22, G01D 13/28, G01D 13/26, G01P 1/08

(54) **Vehicle instrument panel equipped with a light sensor for detecting an illuminated pointer position**
Armaturenbrett mit Lichtsensor zur Detektion einer beleuchteten Zeigerstellung
Tableau de bord de véhicule équipé d'un capteur de lumière pour détecter une position de pointeur illuminé

(30) Priority: 13.08.2013 US 201313965710
(43) Date of publication of application: 04.03.2015
(73) Proprietor: Delphi Technologies, Inc., Troy MI 48007 (US)
(72) Inventor: Blackmer, Stephen C., Millington, MI 48746 (US); Liburdi, Steven A., Grosse Pointe Farms, MI 48236 (US)
(74) Representative: Delphi France SAS

(56) References cited:
- JP-A- 2009 128 244
- JP-A- 2009 258 004
- US-A- 4 631 539
- US-B1- 6 741 184

## Description

### TECHNICAL FIELD OF INVENTION

This disclosure generally relates to vehicle instrument panel assembly, and more particularly relates to an assembly equipped with a sensor configured to detect light emitted by a pointer when the pointer is oriented at a predetermined orientation angle.

### BACKGROUND OF INVENTION

When vehicle instrument panel assemblies with traditional pointers are manufactured, a camera is used to determine any offset error between the actual pointer location and a desired pointer location corresponding to an indicia or grad on the display. This offset is programmed into the instrument panel to ensure that the offset is applied each time the instrument panel is powered. If power to the instrument panel is interrupted during normal operation, the instrument cluster does a "homing" operation to spin the pointer back to a zero position. As the pointer angle is unknown when power is applied, occasionally the motor will hit an internal hard-stop with enough force that motor drive bounces back out a step or two, and so the gauge becomes inaccurate. Document US 6 741 184 B1 relates to an apparatus for accurately determining the indicating position of a gauge and shows the features of the preamble of claim 1. Document JP 2009 128244 A relates to a pointer meter wherein the visibility is prevented from being affected by the quantity of external light. Document JP 2009 258004 A relates to a lighting device for achieving gradation lighting easily changeable in color tone while having high luminance with less change in luminance.

### SUMMARY OF THE INVENTION

In accordance with one embodiment, a vehicle instrument panel assembly configured to determine an orientation angle of an illuminated pointer of the assembly is provided. The assembly includes a pointer, and a sensor. The pointer is configured to emit light and rotate about a display surface of the assembly to point to indicia on the display surface. The sensor is configured to detect light emitted by the pointer when the pointer is oriented at a predetermined orientation angle relative to the display surface.

Further features and advantages will appear more clearly on a reading of the following detailed description of the preferred embodiment, which is given by way of non-limiting example only and with reference to the accompanying drawings.

In general, the assembly 12 is configured to determine an orientation angle of the pointer 24 relative to the display surface 20. In other words, the assembly 12 may be configured to determine when the pointer 24 is at some predetermined orientation angle relative to the display surface. For example, determine when the pointer 24 is pointing toward one of the indicia 22 that corresponds to thirty five miles per hour (35mph). By way of example and not limitation, the assembly 12 may include a sensor 32 configured to detect light emitted by the pointer 24 when the pointer 24 is oriented at an orientation angle that corresponds to thirty five miles per hour (35mph). In addition to radiating light so the pointer 24 appears to be illuminated to the operator 14, a tip 34 of the pointer 24 may have a shape and/or features that help to project some of the light 28 toward the sensor 32.

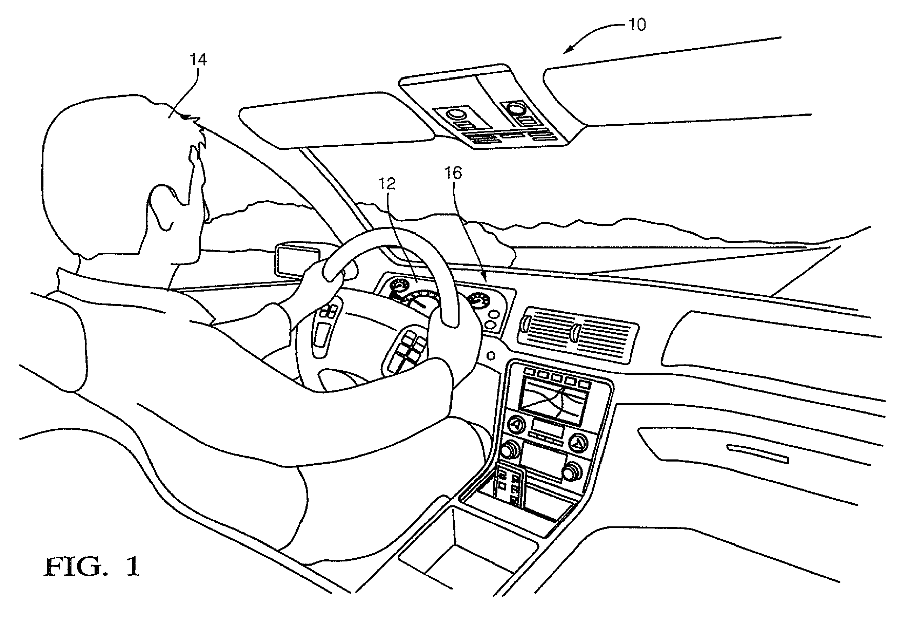

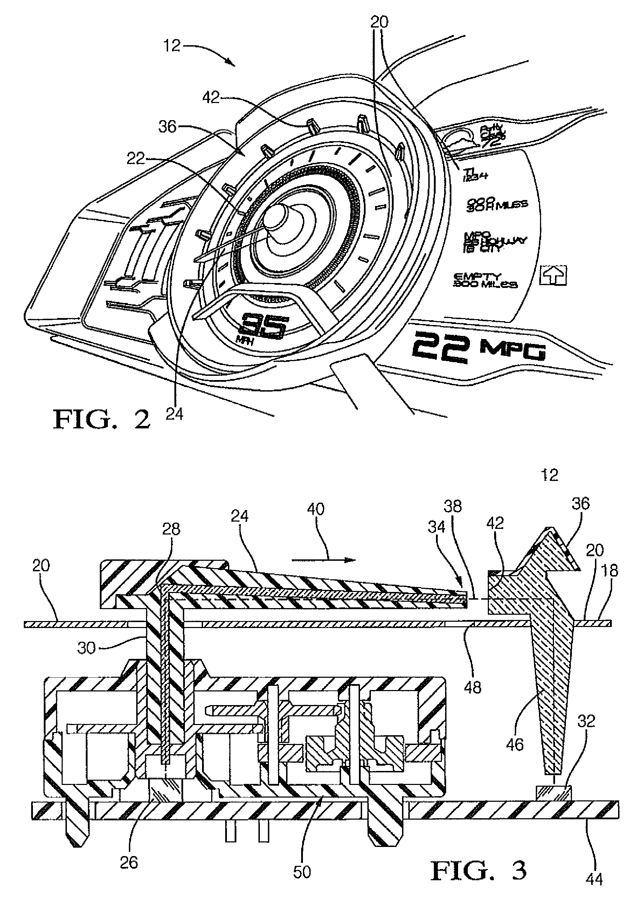

In one embodiment, the assembly 12 may include a trim ring 36 configured to direct light 28 emitted by the pointer 24 toward the sensor 32 when the pointer 24 is oriented at the predetermined orientation angle. For example, the trim ring 38 may be specifically configured to direct light 38 emitted in a radial direction 40 by the pointer 24 toward the sensor 32. Such a configuration may include forming the trim ring 36 of a clear polymeric compound, coating the surface of the trim ring 36 with an opaque coating that prevents light from entering the trim ring 36 except for a clear section 42 that allows light 38 from the pointer 24 to enter the trim ring 36 when the pointer 24 is aligned with the clear section as illustrated in Fig. 3.

If the sensor 32 is located relatively remote from the display surface 20, for example mounted on a printed circuit board 44 under the display surface 20 and spaced apart from the applique 18, then assembly 12 may include a light pipe 46 that may be integral to the trim ring 36 and configured to direct light 38 emitted by the pointer 24 from the display surface 20 to the sensor 32.

Alternatively, the tip 34 may have a beveled end (not shown) or a reflective device (not shown) configured to project light downward through an opening 48 in the applique 18 so that an alternative sensor (not shown) located proximate to the opening 48 could detect light emitted by the pointer 24 when the pointer 24 was aligned over the opening 48.

While the non-limiting example suggests that only one sensor is used and so the pointer 24 can only be detected at one orientation angle, it is recognized that a plurality of sensors could be used to determine that the pointer is at any one of a plurality of predetermined orientation angles. Knowledge of the orientation angle of the pointer 24 at any instant in time may be useful to check for pointer positioning errors due to some malfunction of, for example, a stepper motor 50 used to control the position or orientation angle of the pointer 24.

The assembly may include a controller (now shown) in electrical communication with the sensor 32 and the stepper motor 50. The controller may include a processor such as a microprocessor or other control circuitry as should be evident to those in the art. The controller may include memory, including nonvolatile memory, such as electrically erasable programmable read-only memory (EEPROM) for storing one or more routines, thresholds and captured data. The one or more routines may be executed by the processor to perform steps for determining if signals received by the controller indicate that the pointer 24 is at the orientation angle it is expected to be.

Accordingly, a vehicle instrument panel assembly (the assembly 12) configured to determine an orientation angle of an illuminated pointer (the pointer 32) of the assembly 12 is provided. Being able to determine the orientation angle of the pointer 32 is useful to prevent errors in the event of, for example, a momentary power loss, and/or the stepper motor 50 loosing track of motor position because the pointer 24 struck a hard stop of the assembly 12.

While this invention has been described in terms of the preferred embodiments thereof, it is not intended to be so limited, but rather only to the extent set forth in the claims that follow.

## Claims

1. A vehicle (10) instrument panel assembly (12) configured to determine an orientation angle of an illuminated pointer (24) of the assembly (12), said assembly (12) comprising:
a pointer (24) configured to emit light (28) and rotate about a display surface (20) of the assembly (12) to point to indicia (22) on the display surface (20); and
a sensor (32) configured to detect light (28) emitted by the pointer (24) when the pointer (24) is oriented at a predetermined orientation angle relative to the display surface (20);
**characterized in that**
the assembly (12) includes a trim ring (36) configured to direct light (28) emitted by the pointer (24) toward the sensor (32) when the pointer (24) is oriented at the predetermined orientation angle; and
**in that**
the sensor (32) is located under the display surface (20), and the trim ring (36) includes a light pipe (46) configured to direct light (28) emitted by the pointer (24) from the display surface (20) to the sensor (32).

2. The assembly (12) in accordance with claim 1, wherein the trim ring (36) is configured to direct light (28) emitted in a radial direction (40) by the pointer (24) toward the sensor (32).

## Patentansprüche

1. Eine Armaturentafelanordnung (12) eines Fahrzeugs (10), die konfiguriert ist zum Bestimmen eines Ausrichtungswinkels eines beleuchteten Zeigers (24) der Anordnung (12), wobei die Anordnung (12) aufweist:
einen Zeiger (24), der konfiguriert ist zum Emittieren von Licht (28) und Rotieren um eine Anzeigenoberfläche (20) der Anordnung (12), um auf Indicia (22) auf der Anzeigenoberfläche (20) zu zeigen; und
einen Sensor (32), der konfiguriert ist zum Erfassen von Licht (28), das durch den Zeiger (24) emittiert wird, wenn der Zeiger (24) in einem vorgegebenen Ausrichtungswinkel relativ zu der Anzeigenoberfläche (20) ausgerichtet ist; **dadurch gekennzeichnet, dass**
die Anordnung (12) einen Einstellring (36) umfasst, der konfiguriert ist zum Leiten von Licht (28), das durch den Zeiger (24) emittiert wird, in Richtung des Sensors (32), wenn der Zeiger (24) in dem vorgegebenen Ausrichtungswinkel ausgerichtet ist; und
dadurch, dass
sich der Sensor (32) unter der Anzeigenoberfläche (20) befindet und der Einstellring (36) einen Lichtleiter (46) umfasst, der konfiguriert ist zum Leiten von Licht (28), das durch den Zeiger (24) emittiert wird, von der Anzeigenoberfläche (20) an den Sensor (32).

2. Die Anordnung (12) gemäß Anspruch 1, wobei der Einstellring (36) konfiguriert ist zum Leiten von Licht (28), das in einer radialen Richtung (40) durch den Zeiger (24) emittiert wird, in Richtung des Sensors (32).

## Revendications

1. Assemblage formant tableau de bord (12) pour un véhicule (10), configuré pour déterminer un angle d'orientation d'un pointeur illuminé (24) de l'assemblage (12), ledit assemblage (12) comprenant :
un pointeur (24) configuré pour émettre de la lumière (28) et pour tourner autour d'une surface d'affichage (20) de l'assemblage (12) pour pointer vers des indices (22) sur la surface d'affichage (20) ; et
un capteur (32) configuré pour détecter la lumière (28) émise par le pointeur (24) quand le pointeur (24) est orienté à un angle d'orientation prédéterminé par rapport à la surface d'affichage (20) ;
**caractérisé en ce que**
l'assemblage (12) inclut une bague de garniture (36) configurée pour détecter la lumière (28) émise par le pointeur (24) vers le capteur (32) quand le pointeur (24) est orienté à l'angle d'orientation prédéterminé ; et
**en ce que** le capteur (32) est placé au-dessous de la surface d'affichage (20), et la bague de garniture (36) inclut un tube à lumière (46) configuré pour diriger la lumière (28) émise par le pointeur (24) depuis la surface d'affichage (20) vers le capteur (32).

2. Assemblage (12) selon la revendication 1, dans lequel la bague de garniture (36) est configurée pour diriger la lumière (28) émise dans une direction radiale (40) par le pointeur (24) vers le capteur (32).
